# EUROPEAN PATENT SPECIFICATION

(11) **EP 0 691 080 B1**
(45) Date of publication and mention of the grant of the patent: **07.11.2001**
(21) Application number: 95201492.6
(22) Date of filing: 07.06.1995
(51) Int. Cl.: A23L 1/19, A23D 7/00

(54) **Spoonable non-dairy creams**
Mit dem Löffel essbare nicht-milchhaltige Sahne
Crème fabriquée à partir de produits non-laitiers, pouvant être mangée à la cuillère

(30) Priority: 09.06.1994 GB 9411555
(43) Date of publication of application: 10.01.1996
(73) Proprietor: UNILEVER N.V., 3000 DK Rotterdam (NL); UNILEVER PLC, London EC4P 4BQ (GB)
(72) Inventor: Morley, Wayne Gerald, Wellingborough, Northants, NN8 5YF (GB)
(74) Representative: Boerma, Caroline

(56) References cited:
- EP-A- 0 483 896
- EP-A- 0 509 579
- WO-A-94/15477
- US-A- 3 433 643
- US-A- 3 443 960
- B.HOLLAND & AL.: "The Composition of Foods" 1991 , THE ROYAL SOCIETY OF CHEMISTRY , UK XP002027954 Page 80 * No.200 *
- B.WEBB: "Byproducts from Milk" 1970 , AVI , US XP002027955 Pages 17, 18 * page 17; table 1.3 * * page 18, line 1 - line 2 *

## Description

Spoonable non-dairy creams are well known in the prior art. They are often used in desserts or with cakes. The requirements that spoonable creams should fulfil at 5°C are described in our EP 483,896-B-1. These requirements are:
1) the creams should have an extrapolated yield value of more than 50 Pa, extrapolated from shear rates of 100-300 s⁻¹ (Bingham);
2) the creams should have a Bingham viscosity of less than 500 mPa.s between shear rates of 100-300 S⁻¹;
3) the creams should display failure to stress at a strain of less than 0.5 Radians.

The methods for measuring G' and G'' are disclosed in our European patent application EP 540,085.

Furthermore, the creams should be stable, i.e. no separation should occur when storing these creams over a relatively long period. It should be noted that failure to stress is defined as that point in the strain curve of an emulsion wherein the storage modulus (G') equals the loss modulus (G''). Although the above-mentioned non-dairy creams are known to be spoonable, the spoonability of these creams is still a problem when using low fat levels (15-25 wt.%).

It is, however, for the purpose of obtaining more healthier products, i.e. products containing low fat, that attempts have been made to produce a low-fat equivalent of the above-mentioned spoonable non-dairy creams.

Another purpose of our new invention resides in the ability to incorporate fruit puree, a flavour paste, a concentrated liquid flavour, a liqueur, spices or mixtures thereof into a spoonable, low-fat non-dairy cream without the loss of spoonable rheology.

We have found a solution to the problems mentioned above. Therefore, our invention is concerned in the first place with a water-continuous, spoonable, sterilised, stable non-dairy cream (NDC) having 10-50 wt.% of fat, 0.05-2 wt.% of emulsifier(s) and 0.01-5 wt.% of thickener, which non-dairy cream displays at 5°C :
1) an extrapolated yield value of more than 50 Pa, extrapolated from shear rates of 100-300 S⁻¹ (Bingham), preferably 70-400 Pa;
2) a Bingham viscosity of less than 500 mPa.s between shear rates of 100-300 S⁻¹, preferably 35-250 mPa.s;
3) failure to stress at a strain of less than 0.5 Radians, preferably 0.005-0.25,
the non-diary cream also containing 0.1-3 wt.% of a food-acceptable salt derived from a multivalent metal or alkaline earth metal, the salt being selected from the group of CaCl₂, MgCl₂, MnCl₂, FeCl₂ and FeCl₃, and combinations thereof.

These non-dairy creams are also stable, the term stable being defined as : the cream can be stored for at least 14 days at a temperature of 1-15°C without the consumer noticing any chemical and/or physical changes.

It should be noted that whippable non-dairy creams having a low fat content are disclosed in EP 455,288-B-1. However, nothing is disclosed about a spoonable cream containing a multivalent metal salt. In US 5,290,581 we have disclosed that the whippability of a non-dairy cream based on liquid oils could be improved by the addition of a small amount of a multivalent metal salt.

US-A-3,433,643 discloses a process for the preparation of pasteurised, soured, acidified vegetable products that are similar to sour cream.
US-A-3,433,643 teaches that the combination of acidification with addition of a substantially insoluble calcium source results in products having a firm body, but showing in some cases slight separation.

US-A-3,443,960 relates to the preparation of liquid or powdered artificial soured creams which are whippable.

WO-A-94/15477 (published 21 July 1994 and therefore not prepublished but prior art according to article 54(3) EPC) discloses sterilised coconut cream alternatives comprising 0 to 1500 ppm of a multivalent cation. These coconut cream alternatives are pourable products, which do not show the spoonability and rheology requirements as indicated-above for spoonable creams.

Suitable spoonable NDC's display a firmness, measured as Stevens value, of 10-500 g. Stevens value can be measured with an LFRA-Stevens texture analyzer, using a cylindrical measuring rod having a diameter of 2.5 cm, a height of 3.5 cm and a weight of 20.9 g and 0.4 mm penetration depth.

The multivalent metal salts are selected from the group of CaCl₂, MgCl₂, MnCl₂, FeCl₂ and FeCl₃. The amount of salt is 0.1-3.0 wt.%, preferably 0.5-1.5 wt.%, based on the NDC.

Preferably the non dairy creams according to the invention have a fat content of 15-25 wt.%.

The fats that can be used in our NDC's are all vegetable fats. Preferred fats are, however, palm kernel oil, soybean oil, rapeseed oil, coconut oil, sunflower oil, safflower oil and/or fully or partially hardened fractions thereof. The fat compositions can also contain butterfat; in general, 0-40 wt.%, preferably 20-30 wt.% of the total fat can consist of butterfat.

The most preferred fat mixtures consist of a mixture of sunflower oil and hardened soybean oil, preferably in a weight ratio of 3-5 sunflower oil to 1 partially hardened soybean oil, and of a mixture of hardened palm kernel oil, coconut oil and butterfat, preferably in a weight ratio of 1-3 palmkernel oil to 1-3 coconut oil to 1 butterfat.

It is preferred that our non-dairy creams also contain one or more of the components selected from : fruit puree (normally containing up to 90 wt.% of water), flavour paste, concentrated liquid flavour, liqueurs and spices, the total amount thereof being 0.5-30 wt.%, preferably 1-15 wt.%.

In order to obtain stable, spoonable NDC's, it is important to use an emulsifier. This emulsifier system may consist of any kind of known emulsifier, but preferably polyglycerol esters, Lactodan (a Grindsted product), lecithins and/or monoglycerides are used. These emulsifiers can be split up into two groups : (1) stabilising emulsifiers, such as saturated polyglycerol esters or saturated monoglycerides and (2) destabilising emulsifiers, such as unsaturated polyglycerol esters, unsaturated monoglycerides and lecithins. It is preferred that our NDC's contain at least one component of each of these two groups of emulsifiers.

According to another preferred embodiment the emulsifier is a saturated monoglycerol ester.

If a lecithin is used, the amount of lecithin present is less than 0.35 wt.%. If a saturated monoglyceride is used, we prefer to use a saturated C₁₆ or C₁₈ fatty acid monoglyceride in an amount of less than 0.25 wt.%. If an unsaturated emulsifier is used, we prefer to use an unsaturated monoglyceride from a C_{18:1} fatty acid.

The emulsifiers are present in amounts of 0.05-2.0 wt.%, preferably 0.1-0.8 wt.%.

Thickeners are also present in our NDC compositions. Although all known types of thickeners can be used, e.g. locust bean gum, guar gum, alginate, carrageenan, microcrystalline cellulose, we prefer to use guar gum. The amount of thickener is normally between 0.01 and 5 wt.%, preferably 0.01-0.5 wt.%.

The taste of NDC is rather bland. In order to improve the taste and to give it a dairy impression, 1-10 wt.%, preferably 5-8 wt.% of a milk protein source such as skimmed milk powder, sodium caseinate, a whey powder concentrate or, preferably, buttermilk powder (BMP) can be added to the water phase of the NDC. The presence of these amounts of buttermilk powder in the NDC's does not influence the other, required properties of our NDC's in an unacceptable way.

The invention is further concerned with a process for the production of spoonable, stable NDC's. This process comprises the following steps :
- making a premix of the fats, emulsifier, thickener, multivalent metal salt or alkaline earth metal salt and water and optionally buttermilk powder;

- heating the premix to 70-90°C;
- sterilizing the heated premix by UHT treatment, i.e. by introducing steam of 130-160°C for 1-30 seconds;
- cooling the sterilized premix to 40-60°C;
- homogenizing the cooled premix under pressure, either in a single stage or in a multi-stage process. Pressures that can be applied range from 50-250 bar, preferably 65-225 bar;
- cooling the homogenized mixture to 25-40°C;
- filling a container, e.g. a tetrapack, with the cooled, homogenized, spoonable NDC at 25-40°C.

If a fruit puree, flavour paste, concentrated liquid flavour, a liqueur or spice is used, this component is incorporated into the premix. The water content of these additives is considered to be part of the water phase.

The filled containers should be further cooled to 5°C in the warehouse.

In this way NDC's are obtained that are spoonable and stable for relatively long periods of time.

### EXAMPLE I

A premix was made of the following composition :

| | amount in wt.% |
|---|---|
| Hardened palmkernel oil | 11.2 |
| Coconut oil | 10.3 |
| Butter | 2.0 |
| Buttermilk powder | 7.9 |
| Thickeners | 0.3 |
| Calcium chloride dihydrate | 0.15 |
| Emulsifiers | 0.35 |
| Beta-carotene (2%) | 0.01 |
| Water | balance to 100% |

The premix was treated by a standard UHT process, homogenised at 65 bar, collected at 26°C, and stored at 5°C. The rheological behaviour after 5 weeks' storage was as follows :

| | |
|---|---|
| Yield stress (extrapolated from 100-300 S⁻¹) | 101 Pa |
| Bingham viscosity (100-300 S⁻¹) | 232 mPa.s |
| Failure to stress | 0.059 rad |

### EXAMPLE II

A premix was made of the following composition :

| | amount in wt.% |
|---|---|
| Hardened palmkernel oil | 11.2 |
| Coconut oil | 10.3 |
| Butter | 2.0 |
| Buttermilk powder | 7.9 |
| Thickeners | 0.3 |
| Calcium chloride dihydrate | 1.0 |
| Emulsifiers | 0.35 |
| Beta-carotene (2%) | 0.01 |
| Water | balance to 100% |

The premix was treated by a standard UHT process, homogenised at 65 bar, collected at 26°C, and stored at 5°C. The rheological behaviour after 5 weeks' storage was as follows :

| | |
|---|---|
| Yield stress (extrapolated from 100-300 S⁻¹) | 82 Pa |
| Bingham viscosity (100-300 S⁻¹) | 222 mPa.s |
| Failure to stress | 0.046 rad |

### EXAMPLES III-V

The procedure of Example I was repeated (however, the premix was collected at 24°C). The recipes of the Table below were applied :

| Example | III | IV | V |
|---|---|---|---|
| Hardened palm kernel oil | 10.69 | 11.24 | 11.25 |
| Coconut oil | 9.79 | 10.31 | 10.31 |
| Butter | 1.9 | 2.0 | 2.0 |
| Buttermilk powder | 7.51 | 7.91 | 7.91 |
| Thickener | 0.3 | 0.3 | 0.3 |
| Emulsifiers | 0.34 | 0.35 | 0.35 |
| Calcium chloride dihydrate | 0.14 | 0.10 | 0.10 |
| Banana puree | 1.0 | | |
| Coconut puree | 1.0 | | |
| Pineapple puree | 1.0 | | |
| Mango puree | 1.0 | | |
| Papaya puree | 1.0 | | |
| Hazelnut creme paste | | 0.165 | |
| Butterscotch paste | | | 2.5 |
| Vanilla essence | | | 0.1 |
| White chocolate pronto | | 1.0 | |
| Water to | 100% | 100% | 100% |

The rheological properties of the products were measured. The results are given below :

| Example | III | IV | V |
|---|---|---|---|
| Sample storage time (weeks) | 7 | 2 | 2 |
| Yield stress (Pa) | 133 | 273 | 315 |
| Bingham viscosity (mPa.s) | 85 | 49 | 43 |
| Failure to stress (rad) | 0.027 | 0.014 | 0.009 |

## Claims

1. A water-continuous, spoonable, sterilised, stable non-dairy cream (NDC) having 10-50 wt.% of fat, 0.05-2 wt.% of emulsifier(s) and 0.01-5 wt.% of thickener, which non-dairy cream displays at 5 °C :
1) an extrapolated yield value of more than 50 Pa, extrapolated from shear rates of 100-300 s⁻¹ (Bingham);
2) a Bingham viscosity of less than 500 mPa.s between shear rates of 100-300 s⁻¹;
3) failure to stress at a strain of less than 0.5 Radians,
the non-diary cream also containing 0.1-3 wt.% of a food-acceptable salt derived from a multivalent metal or alkaline earth metal the salt being selected from the group of CaCl₂, MgCl₂, MnCl₂, FeCl₂ and FeCl₃, and combinations thereof.

2. NDC according to Claim 1, wherein the NDC displays a Stevens value of 10-500 g.

3. NDC according to Claims 1-2, wherein the fat is a saturated and/or unsaturated, vegetable fat.

4. NDC according to Claim 3, wherein the fat is at least one of the group consisting of palm kernel oil, soybean oil, rapeseed oil, coconut oil, sunflower oil, safflower oil, butterfat or fully or partially hardened fractions thereof.

5. NDC according to Claim 4, wherein the fat is a mixture of hardened palm kernel oil, coconut oil and butterfat.

6. NDC according to Claim 1, wherein the fat content is 15-25 wt.%.

7. NDC according to Claim 1, wherein the emulsifier is a saturated monoglycerol ester.

8. NDC according to Claim 1, wherein the emulsifier is present in an amount of 0.1-0.8 wt.%.

9. NDC according to Claim 1, wherein the thickener is guar gum.

10. NDC according to Claim 1, wherein the amount of thickener is 0.01-0.5 wt.%.

11. NDC according to Claim 1, wherein also 1-10 wt.% of a milk protein source, preferably buttermilk powder, is present.

12. Process for the preparation of the spoonable NDC according to Claim 1, comprising the steps of
- making a premix of fats, emulsifier, thickener, multivalent metal salt or alkaline earth metal salt and water and optionally buttermilk powder;
- heating the premix to 70-90 °C;
- sterilizing the heated premix by injection of steam of 130-160 °C for 1-30 seconds;
- cooling the sterilized premix to 40-60 °C;
- homogenizing the cooled premix under pressure;
- cooling the homogenized mixture to 25-40 °C;
- filling a container with the cooled, homogenized, spoonable NDC at 25-40 °C.

13. Process according to Claim 12, wherein the pressure, applied in the homogenisation step, is 50-250 bar.

14. Process according to Claim 12, wherein a component selected from the group of a fruit puree, one or more flavour pastes, one or more concentrated liquid flavours, one or more liqueurs, one or more spices or mixtures thereof is added to said premix in an amount of 0.5-30 wt% on total cream.

## Patentansprüche

1. Löffelbare, sterilisierte, stabile, nicht-milchhaltige Sahne (non-dairy cream = NDC) mit kontinuierlicher Wasserphase, die 10 bis 50 Gew.-% Fett, 0,05 bis 2 Gew.-% Emulgator(en) und 0,01 bis 5 Gew.-% Verdickungsmittel enthält, wobei die nicht-milchhaltiger Sahne
1) eine extrapolierte unterste Fließgrenze von mehr als 50 Pa, extrapoliert von Schergeschwindigkeiten von 100 und 300 s⁻¹ (Bingham);
2) eine Bingham-Viskosität von weniger als 500 mPa·s zwischen Schergeschwindigkeiten von 100 bis 300 s⁻¹,
3) eine Bruchspannung bei Beanspruchung von weniger als 0,5 Radiant
zeigt und die nicht-milchhaltige Sahne auch 0,1 bis 3 Gew.-% eines für Lebensmittel geeigneten Salzes eines mehrwertigen Metalls oder Erdalkalimetalls enthält, wobei das Salz aus der Gruppe bestehend aus CaCl₂, MgCl₂, MnCl₂, FeCl₂ und FeCl₃ und Kombinationen davon ausgewählt ist.

2. NDC nach Anspruch 1, **dadurch gekennzeichnet, daß** die NDC einen Stevens-Wert von 10 bis 500 g aufweist.

3. NDC nach Anspruch 1 oder 2, **dadurch gekennzeichnet, daß** das Fett ein gesättigtes und/oder ungesättigtes Pflanzenfett ist.

4. NDC nach Anspruch 3, **dadurch gekennzeichnet, daß** das Fett mindestens eines aus der Gruppe bestehend aus Palmkernöl, Sojabohnenöl, Rapsöl, Kokosnußöl, Sonnenblumenöl, Safloröl, Butterfett oder vollständig oder partiell gehärteten Fraktionen der genannten ist.

5. NDC nach Anspruch 4, **dadurch gekennzeichnet, daß** das Fett ein Gemisch aus gehärtetem Palmkernöl, Kokosnußöl und Butterfett ist.

6. NDC nach Anspruch 1, **dadurch gekennzeichnet, daß** der Fettgehalt 15 bis 25 Gew.-% beträgt.

7. NDC nach Anspruch 1, **dadurch gekennzeichnet, daß** der Emulgator ein gesättigter Monoglycerinester ist.

8. NDC nach Anspruch 1, **dadurch gekennzeichnet, daß** der Emulgator in einer Menge von 0,1 bis 0,8 Gew.-% vorhanden ist.

9. NDC nach Anspruch 1, **dadurch gekennzeichnet, daß** das Verdickungsmittel Guargummi ist.

10. NDC nach Anspruch 1 **dadurch gekennzeichnet, daß** die Menge des Verdickungsmittels 0,01 bis 0,5 Gew.-% beträgt.

11. NDC nach Anspruch 1, **dadurch gekennzeichnet, daß** auch 1 bis 10 Gew.-% einer Milchproteinquelle, vorzugsweise Buttermilchpulver, enthalten sind.

12. Verfahren zur Herstellung der löffelbaren NDC nach Anspruch 1, umfassend die Schritte:
- Herstellen einer Vormischung aus Fetten, Emulgator, Verdickungsmittel, Salz eines mehrwertigen Metalls oder Salz eines Erdalkalimetalls und gegebenenfalls Buttermilchpulver;
- Erwärmen der Vormischung auf 70 bis 90°C;
- Sterilisieren der erwärmten Vormischung durch Injektion von Dampf mit 130 bis 160°C für 1 bis 30 s;
- Abkühlen der erwärmten Vormischung auf 40 bis 60°C;
- Homogenisieren der abgekühlten Vormischung unter Druck;
- Abkühlen der homogenisierten Mischung auf 25 bis 40°C;
- Füllen eines Behälters mit der abgekühlten, homogenisierten, löffelbaren NDC bei 25 bis 40°C.

13. Verfahren nach Anspruch 12, wobei der Druck, der im Homogenisierungsschritt angewendet wird, 50 bis 250 bar beträgt.

14. Verfahren nach Anspruch 12, wobei eine Komponente, ausgewählt aus der Gruppe aus einem Fruchtpüree, einer oder mehreren Aromapaste(n), einem oder mehreren flüssigen Aromastoff(en), einem oder mehreren Likör(en), einem oder mehreren Gewürz(en) oder Gemischen der genannten, der Vormischung in einer Menge von 0,5 bis 30 Gew.-%, bezogen auf die gasamte Sahne, zugesetzt wird.

## Revendications

1. Crème fabriquée à partir de produits non laitiers (NDC), stable, stérilisée, pouvant être mangée à la cuillère, à phase aqueuse continue, ayant 10 à 50% en poids de matière grasse, 0,05 à 2% en poids d'émulsifiant(s) et 0,01 à 5% en poids d'épaississant, crème fabriquée à partir de produits non laitiers qui affiche à 5°C :
1) un seuil d'écoulement extrapolé supérieur à 50 Pa, extrapolé à partir des vitesses de cisaillement de 100 à 300 s⁻¹ (Bingham) ;
2) une viscosité Bingham inférieure à 500 mPa.s entre les vitesses de cisaillement de 100 à 300 s⁻¹ ;
3) une rupture en tension à une déformation inférieure à 0,5 radian ;
la crème fabriquée à partir de produits non laitiers contenant également 0,1 à 3% en poids d'un sel acceptable sur le plan alimentaire dérivé d'un métal multivalent ou d'un métal alcalino-terreux, le sel étant choisi dans le groupe formé par CaCl₂, MgCl₂, MnCl₂, FeCl₂ et FeCl₃, et leurs combinaisons.

2. NDC selon la revendication 1, dans laquelle la NDC affiche une valeur de Stevens de 10 à 500 g.

3. NDC selon les revendications 1 et 2, dans laquelle la matière grasse est une matière grasse végétale, saturée et/ou insaturée.

4. NDC selon la revendication 3, dans laquelle la matière grasse est au moins un élément du groupe formé par l'huile de palmiste, l'huile de soja, l'huile de colza, l'huile de coprah, l'huile de tournesol, l'huile de carthame, la matière grasse du beurre ou leurs fractions entièrement ou partiellement durcies.

5. NDC selon la revendication 4, dans laquelle la matière grasse est un mélange d'huile de paliste durcie, d'huile de coprah et de matière grasse du beurre.

6. NDC selon la revendication 1, dans laquelle la teneur en matière grasse est de 15 à 25% en poids.

7. NDC selon la revendication 1, dans laquelle l'émulsifiant est un ester de monoglycérol saturé.

8. NDC selon la revendication 1, dans laquelle l'émulsifiant est présent à raison de 0,1 à 0,8% en poids.

9. NDC selon la revendication 1, dans laquelle l'épaississant est la gomme guar.

10. NDC selon la revendication 1, dans laquelle la quantité d'épaississant est comprise entre 0,01 et 0,5% en poids.

11. NDC selon la revendication 1, dans laquelle également 1 à 10% en poids d'une source de protéine de lait, de préférence une poudre de babeurre, est présente.

12. Procédé pour la préparation de la NDC pouvant être mangée à la cuillère selon la revendication 1, comprenant les étapes consistant :
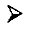 à fabriquer un prémélange des matières grasses, d'émulsifiant, d'épaississant, de sel de métal multivalent ou de sel de métal alcalino-terreux et d'eau et éventuellement, de poudre de babeurre ;
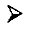 à chauffer le prémélange de 70°C à 90°C ;
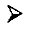 à stériliser le prémélange chauffé par injection de vapeur d'eau à une température de 130°C à 160°C pendant 1 à 30 secondes ;
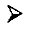 à refroidir le prémélange stérilisé à une température de 40°C à 60°C;
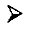 à homogénéiser le prémélange refroidi sous pression ;
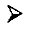 à refroidir le mélange homogénéisé à une température comprise entre 25°C et 40°C ;
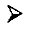 à remplir un récipient avec la NDC pouvant être mangée à la cuillère, homogénéisée, refroidie à une température de 25°C à 40°C.

13. Procédé selon la revendication 12, dans lequel la pression, appliquée dans l'étape d'homogénéisation, est comprise entre 50 et 250 bars.

14. Procédé selon la revendication 12, dans lequel un composant choisi dans le groupe constitué par : une purée de fruits, une ou plusieurs pâtes d'arôme, un ou plusieurs arômes liquides concentrés, une ou plusieurs liqueurs, une ou plusieurs épices ou leurs mélanges, est ajouté audit prémélange en une quantité comprise entre 0,5 à 30% en poids par rapport à la crème totale.
